# EUROPEAN PATENT APPLICATION

(11) **EP 4 834 838 A1**
(43) Date of publication of application: **04.11.2026**
(21) Application number: 24913573.2
(22) Date of filing: 06.12.2024
(51) Int. Cl.: C01B 32/33, C01B 32/372, H01M 4/13, H01M 4/62, H01M 4/02

(54) **METHOD FOR MANUFACTURING POROUS CARBON SUPPORT, POROUS CARBON SUPPORT MANUFACTURED THEREBY, CARBON-SILICON COMPOSITE COMPRISING SAME, AND BATTERY ANODE MATERIAL COMPRISING SAME**

(30) Priority: 29.12.2023 KR 20230197401; 03.12.2024 KR 20240177314
(71) Applicant: Hanwha Solutions Corporation, Jung-gu Seoul 04541 (KR); Korea Carbon Industry Promotion Agency, Jeonju-si, Jeollabuk-do 54853 (KR)
(72) Inventor: JANG, Dawon, Seoul 04541 (KR); JEON, Hyo Jin, Seoul 04541 (KR); YIM, Kyoungwon, Seoul 04541 (KR); KIM, Do Heung, Seoul 04541 (KR); IM, Jangbin, Daejeon 34128 (KR); LEE, Hye-Min, Jeonju-si, Jeonbuk-do 55079 (KR); YANG, Jae-Yeon, Jeonju-si, Jeonbuk-do 54990 (KR); LEE, Byeong-Hoon, Jeonju-si, Jeonbuk-do 55132 (KR)
(74) Representative: Berggren Oy
(86) International application number: PCT/KR2024/019927
(87) International publication number: WO 2025/143630

(57) **Abstract**

The present invention may provide a method for manufacturing a porous carbon support, the method comprising: (1) a step for preparing a mixture by heating and mixing a premix including pitch and a polymer having a melting point below 300°C; (2) a step for stabilizing the mixture; (3) a step for carbonizing the stabilized mixture to obtain a carbonized body; and (4) a step for activating the carbonized body.

## Description

### TECHNICAL FIELD

The present invention relates to a method for manufacturing a porous carbon support, a porous carbon support manufactured thereby, a carbon-silicon composite including the same and a battery anode material including the same.

### BACKGROUND ART

Carbon materials refer to materials made of carbon, which is one of the most common resources on Earth. Carbon materials are very light, strong and have excellent electrical and thermal conductivity, making them a key material widely used in fields such as hydrogen cars, aviation, secondary batteries and high-end consumer goods.

Carbon materials can be manufactured from various raw materials such as palm shell, polyacrylonitrile, rayon and pitch. Among these, it is difficult to control the molecular weight and components of carbon materials manufactured from solid raw materials such as palm shell (Korean Patent Laid-Open Publication No. 10-2019-0093960).

On the other hand, pitch, which is a viscoelastic solid polymer extracted from crude oil or plants, has the advantages of high yield when converted into carbon materials and low cost of raw materials, and the molecular structure thereof is closer to the graphite structure than other raw materials, which can reduce energy required for heat treatment (U.S. Patent Nos. 4,242,196 and 4,340,464).

In the past, a carbon precursor in the form of a pellet was manufactured from such pitch, which was then pulverized into a powder form and then subjected to a physical activation process to manufacture a porous carbon support. However, the physical activation method has a mechanism in which amorphous matter is oxidized prior to crystal grains, and has a behavior in which micropores develop first and then mesopores develop. The porous carbon support manufactured therefrom mainly includes micropores, and there is a problem in that deposition is not performed well into the deep pores when chemical vapor deposition (CVD) or the like is performed in a subsequent process. Additionally, in order to increase mesopores in the porous carbon support, excessive activation is required, which causes a problem in that the yield is reduced.

### DISCLOSURE

### TECHNICAL PROBLEM

One of the several objects of the present invention is to provide a method for manufacturing a porous carbon support having controlled pore characteristics such that sufficient deposition into deep pores can be achieved during chemical vapor deposition, and a porous carbon support manufactured thereby.

One of the several objects of the present invention is to provide a method for manufacturing a porous carbon support that is capable of manufacturing a negative electrode material having a high charge/discharge capacity, and a porous carbon support manufactured thereby.

One of the several objects of the present invention is to provide a method for manufacturing a porous carbon support that is capable of manufacturing a negative electrode material having improved cycle characteristics, and a porous carbon support manufactured thereby.

One of the several objects of the present invention is to provide a method for manufacturing a porous carbon support that is capable of manufacturing a negative electrode material having excellent mechanical properties, and a porous carbon support manufactured thereby.

### TECHNICAL SOLUTION

In an exemplary embodiment of the present invention, the method for manufacturing a porous carbon support according to the present invention includes (1) preparing a mixture by heating and mixing a premix including pitch and a polymer having a melting point below 300°C;
(2) stabilizing the mixture;
(3) carbonizing the stabilized mixture to obtain a carbonized body; and
(4) activating the carbonized body.

In an embodiment of the present invention, step (1) may be performed at a temperature of a softening point of the pitch to a softening point of the pitch + 50°C.

In addition, a softening point of the pitch may be in a range of 220°C to 280°C.

In an example of the present invention, the polymer may include one or more of thermoplastic polymers and water-soluble polymers.

In addition, a weight-average molecular weight of the polymer may be in a range of 5,000 to 2,000,000.

In an example of the present invention, a content of the polymer in step (1) of the method for manufacturing a porous carbon support according to the present invention may be in a range of 0.5 wt% to 5 wt% based on a total weight of the mixture.

In one example, the mixture of step (1) of the method for manufacturing a porous carbon support according to the present invention may further include a catalyst.

In this case, a content of the catalyst may be in a range of 1 wt% to 10 wt% based on a total weight of the mixture.

Another exemplary embodiment of the present invention provides a method for manufacturing a carbon-silicon composite, including depositing silicon on a perforated carbon support manufactured by the method for manufacturing a porous carbon support described above.

Another exemplary embodiment of the present invention provides a porous carbon support, including mesopores with a diameter of 2 nm to 50 nm, wherein a ratio of a volume of the mesopores to a volume of total pores is 40% or more, and wherein a specific surface area is 600 to 1,800 m²/g.

In addition, the porous carbon support may have a total pore volume of 0.5 to 1.5 cm³/g.

In addition, the porous support may have an average particle size (D50) of 1 to 500 µm.

In addition, the present invention provides a carbon-silicon composite, including the porous carbon support described above, and silicon formed on at least a portion of a surface and inside pores of the porous carbon support.

Another exemplary embodiment of the present invention provides a battery anode material, including the porous carbon support described above.

In addition, another exemplary embodiment of the present invention provides a battery anode material, including the carbon-silicon composite.

### ADVANTAGEOUS EFFECTS

One of the several effects of the present invention is to provide a method for manufacturing a porous carbon support in which mesopores are formed in an outer portion and micropores are formed in a deep portion such that silicon can be sufficiently deposited even in the deep pores, and a porous carbon support manufactured thereby.

One of the several effects of the present invention is to provide a method for manufacturing a porous carbon support that is capable of manufacturing a negative electrode material having a high charge/discharge capacity, and a porous carbon support manufactured thereby.

One of the several effects of the present invention is to provide a method for manufacturing a porous carbon support that is capable of manufacturing a negative electrode material having improved cycle characteristics, and a porous carbon support manufactured thereby.

One of the several effects of the present invention is to provide a method for manufacturing a porous carbon support that is capable of manufacturing a negative electrode material having excellent mechanical properties, and a porous carbon support manufactured thereby.

However, various advantageous and beneficial advantages and effects of the present invention are not limited to the above-described contents, and will be more easily understood in the process of describing specific embodiments of the present invention.

### DESCRIPTION OF DRAWINGS

FIG. 1 is an image of a cross-section taken after a mixture was hardened by heat mixing.
FIG. 2 shows the results of measuring the pore distribution for Manufacture Example 1 and Comparative Manufacture Example 1.

### BEST MODE

Hereinafter, embodiments of the present invention will be described with reference to specific embodiments and the attached drawings. It should be understood that the technology described herein is not limited to specific embodiments, but includes various modifications, equivalents and/or alternatives of the embodiments of the present invention. In connection with the description of the drawings, similar reference numerals may be used for similar components.

Additionally, in order to clearly describe the present invention in the drawings, parts that are irrelevant to the description are omitted, and the thickness is enlarged to clearly express various layers and areas, and components with the same function within the scope of the same idea can be described by using the same reference numerals.

In the present specification, the expressions "have", "may have", "include" or "may include" indicate the presence of a corresponding feature (e.g., a component such as a number, function, operation or part), and do not exclude the presence of additional features.

As used herein, the expressions "A or B", "at least one of A and/or B" or "one or more of A or/and B" can include all possible combinations of the listed items. For example, "A or B", "at least one of A and B" or "at least one of A or B" can all refer to (1) including at least one A, (2) including at least one B, or (3) including both at least one A and at least one B.

All numbers and expressions expressing quantities of ingredients, reaction conditions and the like described in the present specification are to be understood as being modified in all cases by the term "about" unless otherwise stated.

The present invention relates to a method for manufacturing a porous carbon support. The method for manufacturing a porous carbon support according to one embodiment of the present invention includes (1) preparing a mixture by heating and mixing a premix including pitch and a polymer having a melting point below 300°C; (2) stabilizing the mixture; (3) carbonizing the stabilized mixture to obtain a carbonized body; and (4) activating the carbonized body.

The method for manufacturing a porous carbon support according to the present invention includes a polymer having a melting point of less than 300°C, thereby being able to be uniformly mixed with pitch as described below, and manufacturing a porous carbon support in which pores are sufficiently developed.

Hereinafter, each step of the present invention will be described in detail.

### Step (1)

Step (1) of the method for manufacturing a porous carbon support according to the present invention may be preparing a mixture by mixing a premix including pitch and a polymer having a temperature of less than 300°C while heating.

The pitch may be synthesized by thermal decomposition and polycondensation of a petroleum raw material. In a specific embodiment of the present invention, the petroleum raw material may include at least one selected from the group consisting of pyrolysis fuel oil (PFO), naphtha cracking residue (NCB), ethylene cracker bottom oil (EBO), vacuum residue (VR), de-asphalted oil (DAO), atmospheric residue (AR), residue fluid catalytic cracking oil (RFCC-DO), residue fluid catalytic cracking decant oil (RFCC-DO) and heavy aromatic oil. In a preferred specific embodiment of the present invention, the petroleum raw material may include pyrolysis fuel oil.

In a specific example of the present invention, the softening point of the pitch may be 200°C or more. Since the pitch has a high softening point, when it is used as a precursor for manufacturing a carbon support, the stabilization process is easy, and a high yield may be obtained after carbonization and activation. The upper limit of the softening point of the pitch may be, for example, 350°C or less, 330°C or less, or 300°C or less, and preferably, the softening point of the pitch is 220°C to 280°C, which may be more advantageous in achieving the objects of the present invention.

In a specific example of the present invention, the polymer may have a melting point of less than 300°C. The polymer may form pores while being decomposed during the carbonization process of the porous carbon support. As a result, the polymer may play a role in helping to form pores inside the porous carbon support during the activation process while creating pores before the activation process. The polymer may be a component that is thermally decomposed and removed during the stabilization and carbonization process described below. The polymer should be uniformly mixed with the pitch for the uniform formation of pores. If the polymer is unevenly mixed, the size of the pores may become too large, resulting in a carbon support having an unstable structure and easily breakable. When manufacturing a porous carbon support using a conventional method, there were cases where a polymer compound was added as a type of additive. Conventional polymer compounds were used in the form of powder, and components having a high melting point were used to prevent thermal decomposition in the stage prior to carbonization. On the other hand, the inventors of the present invention found that by using a polymer having a melting point of less than 300°C, mesopores may be effectively developed. The method for manufacturing a porous carbon support according to the present invention may achieve uniform mixing of pitch and the polymer through step (1) using a polymer having a melting point of less than 300°C.

The melting point of the polymer may be less than 300°C, 295°C or less, 290°C or less, 285°C or less, or 280°C or less, and the lower limit is not particularly limited, but may be, for example, 100°C or more. The method for manufacturing a porous carbon support according to the present invention uses a polymer having a melting point within the above range by mixing with pitch, thereby uniformly mixing the pitch and the polymer, and manufacturing a porous carbon support having a high mesopore ratio.

In one example of the present invention, the polymer of the method for manufacturing a porous carbon support according to the present invention may include one or more of thermoplastic polymers and water-soluble polymers. Since the polymer of the method for manufacturing a porous carbon support according to the present invention includes one or more of thermoplastic polymers and water-soluble polymers, the pitch and the polymer may be mixed more uniformly.

Specific examples of the thermoplastic polymer include, but are not limited to, one or more selected from the group consisting of polyolefin, polyester, polyamide, polyurethane, polyurea, poly(vinyl halide), poly(vinylidene halide), polystyrene, poly(vinyl ester), polycarbonate chain, polyether, polysulfide, polyimide, polysilane, polysiloxane, polycaprolactam, polyacrylate and polymethacrylate.

In addition, specific examples of the water-soluble polymer include, but are not limited to, one or more selected from the group consisting of dextrin, cyclodextrin, mannitol, lactose, hydroxypropyl cellulose, methyl cellulose, starch, protein, polyvinyl alcohol, polyvinyl pyrrolidone, polyethylene oxide, water-soluble photosensitive resin, sulfonated polyisoprene and sulfonated polyisoprene copolymer.

In one example, in the method for manufacturing a porous carbon support according to the present invention, the weight average molecular weight of the polymer may be in a range of 5,000 to 2,000,000. When the weight average molecular weight of the polymer satisfies the above range, uniform thermal mixing with the pitch may be possible. When the weight average molecular weight of the polymer is too large, uneven mixing with the pitch may occur, which may result in uneven pore formation and the formation of pores that are too large.

In one embodiment of the present invention, the content of the polymer in step (1) of the method for manufacturing a porous carbon support according to the present invention may be in a range of 0.5 wt% to 5 wt% based on the total weight of the mixture. If the content of the polymer mixed with the pitch in step (1) is too low, pores may not be sufficiently formed and non-uniform pores may be formed. In addition, if the content of the carbon precursor polymer is too high, pores may grow excessively or there may be a limit to the development of the carbon structure, which may cause a decrease in yield and specific surface area. Additionally, in this case, the characteristics of the manufactured battery may deteriorate.

In one example of the present invention, step (1) of the method for manufacturing a porous carbon support according to the present invention may be performed at a temperature of the softening point of the pitch to the softening point of the pitch + 50°C. The temperature of step (1) may be a temperature higher than the melting point of the polymer described above. Conventional manufacturing methods that use polymer additives and the like in pitch have used various methods to evenly disperse the polymer additive in the pitch. Since the dispersibility of particles in powder form is greatly affected by the size of the particles or the properties of the solvent, in the conventional case, it was necessary to use a polymer additive having a diameter within a predetermined range. In contrast, step (1) of the method for manufacturing a porous carbon support according to the present invention may be performed at a temperature higher than the softening point of the pitch and the melting point of the polymer, and may induce uniform mixing between the pitch having fluidity and the polymer in a molten state.

In one example, the mixture of step (1) of the porous carbon support according to the present invention may further include a catalyst. The catalyst may include, for example, a metal chloride or a metal carbonate.

The metal of the metal chloride additive may include, for example, one or more selected from the group consisting of transition metals, alkali metals, alkaline earth metals and noble metals, but is not limited thereto. If the mixture in step (1) of the method for manufacturing a porous carbon support according to the present invention further includes a catalyst, the activation rate of the carbon material in the carbonization process may be increased. In addition, if the catalyst is included, pore formation may be promoted without adding other additives in the carbonization process.

The transition metal may be one or more selected from nickel (Ni), cobalt (Co), copper (Cu), zinc (Zn), titanium (Ti), iron (Fe) and manganese (Mn), and the alkali metal may be one or more selected from the group consisting of lithium (Li), sodium (Na) and cesium (Cs), but is not limited thereto. In addition, the alkaline earth metal may be one or more selected from magnesium (Mg), calcium (Ca) and strontium (Sr), and the noble metal may be one or more selected from gold (Au), platinum (Pt) and silver (Ag), but is not limited thereto.

In the above example, when the mixture in step (1) further includes a catalyst, the content may be in a range of 1 wt% to 10 wt% based on the total weight of the mixture. When the catalyst included in the mixture in step (1) of the method for manufacturing a porous carbon support according to the present invention is too little, it may not be uniformly distributed such that pores may be formed unevenly or the formation of mesopores may not be smooth. In addition, when the content of the catalyst is too much, pores may be formed excessively, and there may be a problem that a large amount of chlorine gas is generated.

In one example of the present invention, in the method for manufacturing a porous carbon support according to the present invention, the mixture prepared in step (1) may be a pellet in which the pitch and polymer mixed while heating are solidified and pelletized. The pitch and polymer mixed while heating may be solidified, for example, by extrusion and cooling, and the solid pellet may be produced by pelletizing the same. The process of obtaining the solid pellet by extrusion, cooling and pelletizing may be performed by using a commercialized device. For example, this process may be performed by using a double belt cooler & flaker from IPCO, but is not particularly limited to this device.

In this case, if the mixture is the pellet, the pellet may have an average particle size of 3 to 30 mm, and preferably 5 to 25 mm. When the average particle size of the pellet is within this range, the porous carbon support may be manufactured through stabilization, carbonization and activation described below without separately pulverizing the pellet. Therefore, a porous carbon support having controlled pore characteristics may be provided while improving the yield of the product through a simple process.

### Step (2)

Step (2) of the method for manufacturing a porous carbon support according to the present invention may be stabilizing the mixture prepared in step (1). Specifically, step (2) may be stabilizing the structure of pitch by first oxidizing the mixture.

In one example of the present invention, the stabilization may be performed at a temperature of 250°C to 400°C. The lower limit of the stabilization temperature can be 250°C or more, 260°C or more, 270°C or more, or 280°C or more, and the upper limit may be 400°C or less, 390°C or less, 380°C or less, 370°C or less, 360°C or less, or 350°C or less, but is not limited thereto. When the stabilization temperature satisfies the above range, the carbon structure in the pitch changes from thermoplastic to thermosetting, and the structure may be stably maintained during a subsequent carbonization process.

In a specific embodiment of the present invention, the stabilization may be performed at a pressure of 0.1 to 10 bar, and preferably 0.5 to 5 bar. When the stabilization is performed at this pressure, the structure of the carbon inside the mixture may be sufficiently stabilized.

In a specific embodiment of the present invention, the stabilization may be performed under conditions of a flow rate of an oxidizing gas, preferably air, of 0.1 to 500 mL/min, and preferably 1 to 300 mL/min. When the stabilization is performed under these conditions of a flow rate of an oxidizing gas, the structure of the carbon inside the mixture may be sufficiently stabilized.

In a specific embodiment of the present invention, the stabilization may be performed for a period of 1 to 10 hours, and preferably 2 to 8 hours. If the stabilization is performed for this period of time, the structure of the carbon inside the mixture may be sufficiently stabilized.

### Step (3)

Step (3) of the method for manufacturing a porous carbon support according to the present invention may be carbonizing the stabilized mixture to obtain a carbonized body. Through carbonization of the mixture, other functional groups included in the pitch may be removed, and a carbonized body composed of substantially pure carbon may be obtained.

In a specific embodiment of the present invention, the carbonization may be performed under an inert gas atmosphere. In a preferred specific embodiment of the present invention, the carbonization may be performed under a nitrogen or argon atmosphere, but is not particularly limited thereto.

In a specific embodiment of the present invention, the carbonization may be performed at a temperature of more than 700°C and 1,000°C or less, and preferably 800 to 900°C. If the temperature during the carbonization is lower than this range, carbonization may not be sufficiently performed, and if the temperature during the carbonization is higher than this range, the carbonization yield may decrease.

In a specific embodiment of the present invention, the carbonization may be performed under a flow rate condition of an inert gas, preferably nitrogen, of 0.1 to 30 mL/min, and preferably 0.1 to 10 mL/min. When the carbonization is performed under this inert gas flow rate condition, the mixture may be sufficiently carbonized.

In a specific embodiment of the present invention, the carbonization may be performed for 0.5 to 5 hours, and preferably 1 to 3 hours. When the carbonization is performed for this time, the mixture may be sufficiently carbonized.

### Step (4)

The method for manufacturing a porous carbon support according to the present invention includes step (4) of activating the carbonized body produced in step (3). In step (4), the carbonized body is activated to obtain a porous carbon support. By activating the carbonized body (carbonized mixture), pores may be formed in the carbonized body, thereby obtaining a porous carbon support.

In a specific embodiment of the present invention, the activation of the carbonized body may be performed under an oxidizing gas atmosphere. In a preferred specific embodiment of the present invention, the activation of the carbonized body may be performed under a steam atmosphere, but is not particularly limited thereto.

In a specific example of the present invention, the activation of the carbonized body may be performed at a temperature of more than 700°C and 1,000°C or less, and preferably 800 to 900°C. When the activation of the carbonized body is performed at this temperature, a porous carbon support in which mesopores are sufficiently formed may be obtained.

In a specific embodiment of the present invention, the activation of the carbonized body may be performed at a pressure of 0.1 to 10 bar, and preferably 0.1 to 5 bar. When the activation of the carbonized body is performed at this pressure, a porous carbon support in which micropores and mesopores are sufficiently formed may be obtained.

In a specific example of the present invention, the activation of the carbonized body may be performed under a flow rate condition of an oxidizing gas, preferably steam, of 0.1 to 100 mL/min, and preferably 0.1 to 50 mL/min. When the activation of the carbonized body is performed under this oxidizing gas flow rate condition, a porous carbon support in which micropores and mesopores are sufficiently formed may be obtained.

In a specific embodiment of the present invention, the activation of the carbonized body may be performed for 0.5 to 5 hours, and preferably 1 to 3 hours. When the activation of the carbonized body is performed for this period of time, a porous carbon support in which micropores and mesopores are sufficiently formed may be obtained.

In a specific embodiment of the present invention, steps (2) to (4) above may be performed continuously in one device. In a preferred specific embodiment of the present invention, steps (2) to (4) above may be performed continuously in one rotary kiln, but are not particularly limited to this device. Since the above-described stabilization, carbonization and activation are performed continuously in one device, the optimization of the process may be easily achieved.

In a specific embodiment of the present invention, the porous carbon support obtained in step (4) may be further disintegrated or pulverized and classified. The porous carbon support may be further finely divided through disintegration or pulverization, and the particle size distribution of the porous carbon support may be made uniform through classification. Here, the classification may be dry classification, wet classification, classification using a sieve and the like. By the disintegration or pulverization and classification treatment, a porous carbon support powder having an average particle size (D50) of 1 to 500 µm may be obtained.

In addition, the present invention provides a method for manufacturing a carbon-silicon composite, including depositing silicon on a porous carbon substrate manufactured by the method for manufacturing a porous carbon substrate described above.

In this case, the deposition may be performed at a temperature of 300°C to 600°C, and under a silane (SiH₄) gas atmosphere of 150 sccm to 500 sccm. The deposition may utilize, for example, chemical vapor deposition (CVD) and may be performed under atmospheric pressure conditions, but is not limited thereto. By the deposition, silicon may be deposited on the surface and inside the pores of the porous carbon support according to the present invention.

The present invention also relates to a porous carbon support. The porous carbon support according to the present invention may be manufactured by the method described above.

In one example of the present invention, the porous carbon support according to the present invention includes mesopores having a diameter of 2 nm to 50 nm, and the ratio of the volume of the mesopores to the volume of the total pores is 40% or more.

The pores that the porous carbon support has may be classified into micropores having a diameter of less than 2 nm, mesopores having a diameter of 2 to 50 nm, and macropores having a diameter of more than 50 nm, depending on their size. These porous supports have been studied in the direction of increasing the ratio of micropores to increase the specific surface area, or increasing the ratio of macropores to increase the amount of material supported inside the pores. However, when there are many micropores, it is difficult for silicon to be deposited inside the pores, which causes a problem of reduced electrical capacity. In addition, when there are many macropores, silicon may agglomerate, which may generate stress during repeated charge/discharge processes, thereby mechanically damaging the negative electrode material.

On the other hand, in the case of mesopores, silicon may be sufficiently deposited in deep pores when depositing silicon. The porous carbon support according to the present invention may deposit a sufficient amount of silicon inside the pores of the porous support by including mesopores within a predetermined range.

The porous carbon support may have a ratio of the volume of mesopores to the volume of the entire pores of 40% or more, preferably 41% or more, and more preferably 42% or more. In addition, the porous carbon support may have an upper limit of the ratio of mesopores to the entire pores of 100% or less, preferably less than 100%, more preferably 90% or less, even more preferably 80% or less, and even more preferably 60% or less. When the ratio of mesopores to the entire pores of the porous carbon support satisfies the above range, the porous carbon support may have excellent electrical properties while preventing excessive aggregation of silicon, thereby preventing damage due to volume expansion of silicon.

In addition, the porous carbon support according to the present invention has a BET specific surface area of 600 to 1,800 m ²/g.

In this case, the BET specific surface area of the porous carbon support may be a value measured by using ASAP 2420 (Micromeritics instrument (USA)). Specifically, analysis may be performed after vacuum drying at 300°C for 5 hours, and the results of N2/77K Isotherm adsorption according to ISO9277 may be calculated by using the BET equation and the BJH equation.

The BET specific surface area of the porous carbon support may be 600 m²/g or more, preferably 650 m²/g or more, more preferably 700 m²/g or more, and even more preferably 750 m²/g or more, and the upper limit of the BET specific surface area range of the porous carbon support may be 1,800 m²/g or less, preferably 1,770 m²/g or less, more preferably 1,740 m²/g or less, and even more preferably 1,700 m²/g or less. When the BET specific surface area of the porous carbon support is less the range, the ratio of macropores may increase, which may lower the mechanical strength of the negative electrode material and may result in a lack of effective pores. In addition, when the BET specific surface area of the porous carbon support is more than the range, the ratio of micropores may increase, and silicon may not be sufficiently deposited deep into the porous carbon support.

In one embodiment of the present invention, the total pore volume of the porous carbon support according to the present invention may be 0.5 to 1.5 cm³/g, and preferably 0.51 to 1.5 cm³/g. Accordingly, it may be more advantageous in achieving the objects of the present invention.

In one embodiment of the present invention, the tap density of the porous carbon support according to the present invention may be 0.7 g/mL or less. The tap density of the porous carbon support may be a value measured by using PT-TD200 (Pharma Test). Specifically, 40 mL of the porous carbon support is loaded into a cylinder and tapped 1,000 times, and the first volume is observed. After the observation, tapping is performed 1,000 times again, and the volume is observed. This process is repeated three times until there is no difference from the previous volume, and then, the tap density may be calculated as the final volume. The tap density of the porous carbon support may be 0.70 g/mL or less, 0.65 g/mL or less, or 0.60 g/mL or less, and may be 0.05 g/mL or more or 0.1 g/mL or more, but is not limited thereto. If the tap density of the porous carbon support is too low, process control is difficult during silane gas deposition, which may result in a decrease in yield. Additionally, if the tap density of the porous carbon support is too high, uniform coating may be difficult during silane gas deposition.

In one embodiment of the present invention, the average particle size (D50) of the porous carbon support according to the present invention may be 1 to 500 µm. The average particle size may refer to particle size distribution D50 and may be a value measured by using a MICROTRAC S3500 device. Specifically, it may refer to an average value obtained by performing particle size analysis three times after dispersing the porous carbon support in ethanol. The average particle size of the porous carbon support may be 1 to 500 µm, preferably 1 to 100 µm, more preferably 1 to 20 µm, more preferably 1 to 18 µm, even more preferably 2 to 16 µm, more preferably 2 to 14 µm, even more preferably 3 to 12 µm, and most preferably 3 to 10 µm. When the average particle size of the porous carbon support is less than the range, when performing silicon coating, silicon may be quickly filled inside and then, additional coating may be performed on the surface such that the surface coating layer may be formed thickly. In this case, deterioration may be accelerated during charge and discharge, and when manufacturing an electrode, the agglomeration of materials having small particle sizes may occur, and deterioration of the agglomerated portion may be significant. In addition, when the average particle size of the porous carbon support is more than the range, the diffusion of silane gas into the inside of the porous carbon support may be difficult such that it may be difficult to form a uniform silicon coating layer inside the support. In addition, when manufacturing an electrode, it may be difficult to uniformly coat a slurry on a current collector such that the uniformity of capacity may deteriorate.

In one example, the porous carbon support according to the present invention may include macropores having a diameter of more than 50 nm. In this case, the ratio of the volume of the macropores to the total pore volume of the porous carbon support may be 0.4 (40%) or less. The ratio of the volume of the macropores to the total pore volume of the porous carbon support may be 0.40 (40%) or less, 0.38 (38%) or less, 0.36 (36%) or less, 0.34 (34%) or less, 0.32 (32%) or less, or 0.30 (30%) or less, but is not limited thereto. The lower limit of the ratio of the volume of the macropores to the total pore volume of the porous carbon support is not particularly limited, but may be, for example, 0% or more or more than 0%. If the macropore ratio of the porous carbon support is too high, the mechanical strength of the negative electrode material manufactured with the porous carbon support may be reduced. In addition, the local agglomeration of silicon may occur inside the negative electrode material, which may cause stress due to volume expansion during repeated charge/discharge processes, thereby causing damage to the negative electrode material.

In addition, the present invention provides a carbon-silicon composite, including the porous carbon support described above and silicon formed on at least a portion of a surface and inside pores of the porous carbon support.

The silicon may be formed by deposition. Since the porous carbon support according to the present invention has the above structure, the negative electrode material manufactured from the porous carbon support according to the present invention and/or the carbon-silicon composite may have high electrical capacity while minimizing the influence due to volume expansion of silicon.

In another example, the content of the deposited silicon may be 10 wt% or more based on the total weight of the particles. The content of the silicon may be a value obtained by analysis through an energy dispersive spectrometer (EDS). The lower limit of the content of the deposited silicon may be 10 wt% or more, 15 wt% or more, 20 wt% or more, 25 wt% or more, or 30 wt% or more, but is not limited thereto. Preferably, the lower limit of the content of the deposited silicon may be 36 wt% or more, and more preferably, 41 wt% or more. In addition, the upper limit of the content of the deposited silicon may be 60 wt% or less, 59 wt% or less, 58 wt% or less, or 57 wt% or less, but is not limited thereto. If the content of the deposited silicon is too low, the electric capacity may be reduced. In addition, if the silicon content is too large, the problem caused by the volume expansion of silicon during charge and discharge may not be solved, which may cause structural damage to the negative electrode material and deteriorate the cycle characteristics.

The present invention also relates to a battery anode material, including the porous carbon support described above. The battery anode material including the porous carbon support according to the present invention may have improved mechanical strength along with high electrical capacity and excellent cycle characteristics.

In addition, the present invention relates to a battery anode material including the carbon-silicon composite. The battery anode material including the carbon-silicon composite according to the present invention may have improved mechanical strength along with high electrical capacity and excellent cycle characteristics.

The method for manufacturing the battery anode material is not particularly limited, and a general method for manufacturing a battery anode material may be used. For example, the battery anode material may be manufactured by mixing a porous carbon support, an active material, a conductive agent and a binder, and coating/drying/rolling the mixture onto a member such as an electrode current collector, but is not limited thereto.

The present invention also relates to a battery including the above-described battery anode material. The battery including the battery anode material according to the present invention may be a lithium ion battery or an all-solid-state battery, but is not limited thereto.

The lithium ion battery may specifically include a cathode, an anode, a separator and an electrolyte. In this case, the anode may include the above-described battery anode material. The cathode may use a material that is usable in a lithium ion battery, and may include, for example, one or more cathode active materials selected from doped or undoped lithium nickel oxide, lithium cobalt oxide, lithium cobalt aluminum oxide, lithium nickel cobalt manganese oxide, lithium manganese oxide and lithium nickel cobalt aluminum oxide, and a cathode current collector selected from aluminum, stainless steel, nickel, titanium, platinum or an alloy thereof, but is not limited thereto. In addition, the separator may use a typical separator usable in a lithium ion battery. The separator may include, for example, one or more selected from glass fiber, polyester, Teflon, polyethylene, polypropylene and polytetrafluoroethylene (PTFE), but is not limited thereto.

The negative electrode of the lithium ion battery may include the above-described battery anode material. The negative electrode may include a negative electrode collector and a battery anode material, and the negative electrode collector may include one or more selected from aluminum, stainless steel, nickel, titanium, platinum or an alloy thereof, but is not limited thereto.

The electrolyte of the lithium ion battery may include, but is not limited to, an organic liquid electrolyte, an inorganic liquid electrolyte, a polymer electrolyte or a molten inorganic electrolyte usable in a lithium ion battery.

The all-solid-state battery may specifically include a positive electrode, a negative electrode and a solid electrolyte, and may further include a separator if necessary, but is not limited thereto. The positive electrode may include the above-described cathode active material, and may include a cathode current collector if necessary, but is not limited thereto.

The negative electrode may include a battery anode material according to the present invention. The negative electrode may have a single-layer structure including the battery anode material, or may further include an anode current collector as needed, but is not limited thereto.

The solid electrolyte may selectively use a solid electrolyte usable for an all-solid-state battery. The solid electrolyte may be one or more selected from the group consisting of, for example, a Garnet-type, a Nasicon-type, a LISICON-type, a perovskite-type and a LiPON-type, but is not limited thereto.

### MODES OF THE INVENTION

Hereinafter, preferred examples are presented to help understand the present invention. However, the following examples are provided only to help understand the present invention more easily, and the content of the present invention is not limited by the following examples.

### Manufacture Examples 1 and 2: Manufacture of porous carbon supports

300 g of petroleum residual oil (YNCC, HTC PFO (pyrolysis fuel oil)) was placed in a reactor equipped with a stirrer, and pyrolysis and polycondensation were performed at 450°C for 3 hours while supplying nitrogen at a flow rate of 100 mL/min. In this case, the stirrer was rotated at a speed of 200 rpm to mix the reactants. The polymerized pitch was solidified and pelletized to obtain solid pitch pellets having a particle size of 1 to 30 mm.

To the solid pitch pellets obtained above, 1 wt% (Manufacture Example 1) and 5 wt% (Manufacture Example 2) of CMC (carboxymethyl cellulose) as a polymer were added, and then, the temperature was increased at a rate of 2°C/min to 260°C, which is the softening point temperature of the pitch, and then mixed at 300 rpm for 4 hours. Additionally, in order to prevent oxidation, thermal mixing was performed while supplying nitrogen at 2 L/min.

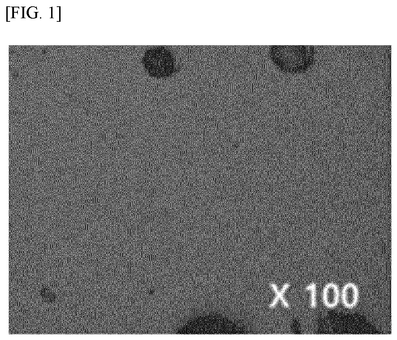

FIG. 1 is an image of a cross-section taken after the mixture was hardened by heat mixing. Referring to FIG. 1, it can be confirmed that the pitch and polymer were evenly mixed.

The manufactured mixture was crushed into a size of 200 µm or less and then placed in a rotary kiln to sequentially perform stabilization, carbonization and activation. The stabilization process was performed by heating to 310°C at a rate of 2°C/min in an air atmosphere and then maintaining for 2 hours. The carbonization and activation processes were performed by heating to 700°C at a rate of 10°C/min in a nitrogen atmosphere and maintaining for 1 hour (carbonization), then heating to 950°C at a rate of 10°C/min, and then changing to a steam atmosphere and maintaining for 1 hour (activation).

The activated carbonized body, after the activation, was pulverized by using a pulverizer (NETZSCH, air jet mill) to manufacture a porous carbon support.

### Manufacture Example 3

A porous carbon support was manufactured in the same manner as in Manufacture Examples 1 and 2, except that 1 wt% of PVA (polyvinyl alcohol) was added as the polymer.

### Comparative Manufacture Example 1

A porous carbon support was manufactured in the same manner as in Manufacture Examples 1 and 2, except that no polymer was added.

### Comparative Manufacture Example 2

A porous carbon support was manufactured in the same manner as in Manufacture Examples 1 and 2, except that the polymer was not added, and the maintaining time in the activation process was increased to 2 hours.

### Experimental Example 1: Measurement of physical properties of porous carbon supports

Tables 1 and 2 below show the measured physical properties of the manufactured porous carbon supports. The specific surface area of the porous carbon supports was measured by using Belsorp mini II in accordance with ASTM D4820-93. The tap density of the carbon supports was measured by using a tap density analyzer (Electrolab, ETD-1020x) in accordance with ASTM B527. The average particle size of the carbon supports was measured by using a particle size analyzer (Horiba, laser particle analyzer, LA-960V2) in accordance with ASTM E112.

**[Table 1]**

| | Manufacture Example 1 | Manufacture Example 2 | Manufacture Example 3 |
|---|---|---|---|
| Specific surface area (m²/g) | 1220 | 1620 | 860 |
| Volume of total pores (cm³/g) | 0.64 | 1.06 | 0.51 |
| Volume of micropores (cm³/g) | 0.37 | 0.39 | 0.22 |
| Volume of mesopores (cm³/g) | 0.27 | 0.37 | 0.29 |
| Ratio of mesopores(%) | 42.2 | 48.6 | 56.9 |
| Yield (wt%) | 40.7 | 32.4 | 48.7 |

**[Table 2]**

| | Comparative Manufacture Example 1 | Comparative Manufacture Example 2 |
|---|---|---|
| Specific surface area (m²/g) | 1070 | 1970 |
| Volume of total pores (cm³/g) | 0.49 | 1.03 |
| Volume of micropores (cm³/g) | 0.37 | 0.55 |
| Volume of mesopores (cm³/g) | 0.12 | 0.48 |
| Ratio of mesopores(%) | 24.5 | 46.6 |
| Yield (wt%) | 51.7 | 22.0 |

Referring to Tables 1 and 2 above, it can be confirmed that Manufacture Examples 1 to 3 had the ratio of mesopores of 40% or more and a yield of 30 wt% or more. On the other hand, Comparative Manufacture Example 1 showed the ratio of mesopores of 24.5%, which is significantly lower than Manufacture Examples 1 to 3, and Comparative Manufacture Example 2 showed the ratio of mesopores of 46.6% but a yield of 22.0 wt%, showing a lower ratio of mesopores ratio or yield than Manufacture Examples 1 to 3.

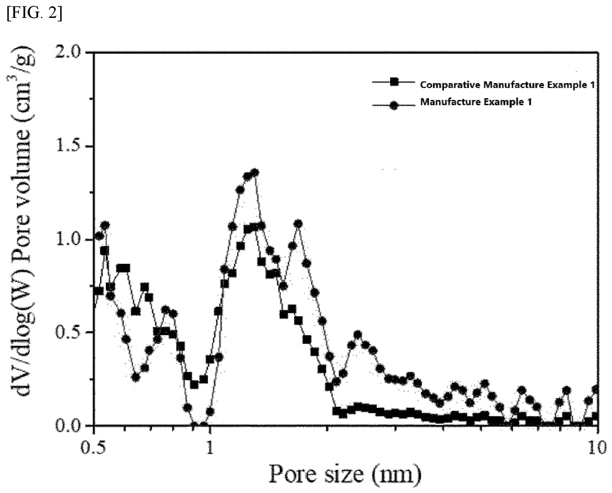

FIG. 2 shows the results of measuring pore distribution for Manufacture Example 1 and Comparative Manufacture Example 1. Referring to FIG. 2, it can be confirmed that Comparative Manufacture Example 1 had fewer pores with a size of 2 nm to 50 nm compared to Manufacture Example 1.

### Example 1: Manufacture of carbon-silicon composite particles

Carbon-silicon composite particles were manufactured by using the porous carbon support manufactured in Manufacture Example 1. 15 g of the porous carbon support was placed in a rotary kiln, and silane (SiH₄) gas was injected to deposit the porous carbon support.

During the silane gas coating, the pressure was performed at atmospheric pressure, and the deposition was performed for 60 minutes at a temperature of 475°C and a flow rate of 300 sccm to manufacture carbon-silicon composite particles.

### Comparative Example 1

Carbon-silicon composite particles were manufactured in the same manner as in Example 1, except that the porous carbon support manufactured in Comparative Manufacture Example 1 was used.

### Comparative Example 2

Carbon-silicon composite particles were manufactured in the same manner as in Example 1, except that the porous carbon support manufactured in Comparative Manufacture Example 2 was used.

**[Table 3]**

| | Example 1 | Comparative Example 1 | Comparative Example 2 |
|---|---|---|---|
| Average particle size (µm) | 7.8 | 10.1 | 5.7 |
| Specific surface area (m²/g) | 7.5 | 8.9 | 615.4 |
| Tap density (g/ml) | 0.7 | 0.6 | 0.5 |
| Content of silicon (wt%) | 57 | 40 | 35 |

Referring to Table 3 above, it can be seen that Example 1 had a lower specific surface area than Comparative Examples 1 and 2, and thus, the silicon formation property within the pores of the porous carbon support was significantly superior.

In particular, the specific surface area of Example 1 was about 1.2% compared to the specific surface area of Comparative Example 2, indicating that the carbon-silicon composite particles of Example 1 had significantly superior silicon formation properties within the pores of the porous carbon support compared to the carbon-silicon composite particles of Comparative Example 2.

In addition, it can be seen that Example 1 had a higher content of silicon than Comparative Examples 1 and 2.

In this case, Comparative Example 1 has a small difference in specific surface area from Example 1, which is 1.4 m² /g, despite its low silicon content. This can be seen as a phenomenon in which silicon was not well deposited inside Comparative Example 1 but was deposited only in external pores. As a result, the silicon conversion rate of silane gas also decreased, or the content of silicon inside the particles decreased due to particle agglomeration as the particles were formed into silicon lumps.

In addition, Comparative Example 2 had relatively many large pores in the support compared to Example 1, and thus, silicon could not be deposited entirely, resulting in a low silicon deposition amount, and thus a relatively large specific surface area.

### Experimental Example 2: Electrochemical evaluation of secondary battery

Half coin cells were manufactured by using each of the carbon-silicon composites manufactured in Example 1, Comparative Example 1 and Comparative Example 2.

A slurry was prepared by mixing a carbon-silicon composite : a conductive material : a binder in a ratio of 8:1:1. In this case, the conductive material used was super-P, and the binder used was a mixture of styrene butadiene rubber (SBR) and sodium carboxymethyl cellulose (CMC) in a weight ratio of 5:5.

Next, the slurry was evenly applied to copper foil and primarily dried in an 80°C oven for about 1 hour. After the primary drying, roll pressing was performed, and secondary drying was performed in a 120°C vacuum oven for about 6 hours and 30 minutes to manufacture a negative electrode plate.

A half coin cell was manufactured by using the above-prepared manufactured negative plate and lithium foil as a counter electrode. A porous polyethylene film was used as a separator, and a CR2032 half coin cell (half cell) was manufactured under the conditions shown in Table 5 below.

The electrolyte was prepared by dissolving 10 wt% of fluoro-ethylene carbonate (FEC), 0.2 wt% of lithium tetrafluoroborate (LiBF4), 0.5 wt% of vinylene carbonate (VC) and 1 wt% of propane sulton (PS) additives in a solution in which LiPF₆ at a concentration of 1.3 M was dissolved in a solvent mixed with ethylene carbonate (EC), ethyl methyl carbonate (EMC) and dimethyl carbonate (DMC) in a volume ratio of 3:5:2 (see Table 4).

**[Table 4]**

| | |
|---|---|
| Composition (AM:CM:BM) | 8:1:1 |
| Area capacity (mAh/cm²) | 1 |
| Electrolyte | 1.3M LiPF6 EC/EMC/DMC 3:5:2, FFC 10%, LiBF4 0.2%, 0.5% VC, 1% PS |
| Cut-off voltage(V) | Formation : 0.005 ~ 1.5, Cycle test : 0.005 ~ 1.5 |
| C-rate (C) | Formation: At 0.1~0.1. 0.005V, 0.01C cut-off (CV) |

In Table 4 above, AM, CM and BM represent an active material (carbon-silicon composite particles), a conductor (Super P carbon black) and a binder (styrenebutadiene rubber/carboxymethyl cellulose 5:5), respectively, and EC, EMC, DMC, FEC, VC and PS represent ethylene carbonate, ethyl methyl carbonate, dimethyl carbonate, fluoroethylene carbonate, vinylene carbonate and propane sultone, respectively.

Electrochemical analysis was performed on the manufactured half coin cells under the following conditions.
Cut off voltage (V): 0.005 - 1.5V (Formation), 0.005 - 1.2V(Cycle)
Formation C-rate (C): 0.1C lithiation, 0.1C delithiation
Cycle C-rate (C): 0.5C lithiation, 0.5C delithiation
The results are shown in Table 5 and FIG. 3.

**[Table 5]**

| | Charge capacity (mAh/g) | Discharge capacity (mAh/g) | ICE (%) |
|---|---|---|---|
| Example 1 | 2264 | 2059 | 91 |
| Comparative Example 1 | 2015 | 1761 | 87 |
| Comparative Example 2 | 1789 | 1488 | 83 |

Referring to Table 5, it can be seen that Example 1 using the porous carbon support according to Manufacture Example 1 had significantly superior charge and discharge capacities compared to Comparative Example 1 using the porous carbon support according to Comparative Manufacture Example 1 and Comparative Example 2 using the porous carbon support according to Comparative Manufacture Example 2.

In particular, it can be confirmed that Example 1 showed a high capacity and high ICE due to the high silicon content, and the SEI layer was properly and uniformly formed.

It can be confirmed that Comparative examples 1 and 2 had low capacity due to low silicon content and low ICE due to uneven SEI layer formation.

Although the embodiments of the present invention have been described in detail above, the present invention is not limited to the above-described embodiments and the attached drawings, but is intended to be limited by the appended claims. Accordingly, various forms of substitution, modification and change may be made by those skilled in the art within the scope that does not depart from the technical idea of the present invention described in the claims, and this will also be considered to fall within the scope of the present invention.

## Claims

1. A method for manufacturing a porous carbon support, the method comprising:
(1) preparing a mixture by heating and mixing a premix comprising pitch and a polymer having a melting point below 300°C;
(2) stabilizing the mixture;
(3) carbonizing the stabilized mixture to obtain a carbonized body; and
(4) activating the carbonized body.

2. The method of claim 1, wherein step (1) is performed at a temperature of a softening point of the pitch to a softening point of the pitch + 50°C.

3. The method of claim 1, wherein a softening point of the pitch is in a range of 220°C to 280°C.

4. The method of claim 1, wherein the polymer comprises one or more of thermoplastic polymers and water-soluble polymers.

5. The method of claim 1, wherein a weight-average molecular weight of the polymer is in a range of 5,000 to 2,000,000.

6. The method of claim 1, wherein a content of the polymer in step (1) is in a range of 0.5 wt% to 5 wt% based on a total weight of the mixture.

7. The method of claim 1, wherein the mixture of step (1) further comprises a catalyst.

8. The method of claim 7, wherein a content of the catalyst is in a range of 1 wt% to 10 wt% based on a total weight of the mixture.

9. A method for manufacturing a carbon-silicon composite, comprising depositing silicon on a perforated carbon support manufactured by the method for manufacturing a porous carbon support according to any one of claims 1 to 8.

10. A porous carbon support, comprising:
mesopores with a diameter of 2 nm to 50 nm,
wherein a ratio of a volume of the mesopores to a volume of total pores is 40% or more, and
wherein a specific surface area is 600 to 1,800 m²/g.

11. The porous carbon support of claim 10, wherein the porous carbon support has a total pore volume of 0.5 to 1.5 cm³/g.

12. The porous carbon support of claim 10, wherein the porous support has an average particle size (D50) of 1 to 500 µm.

13. A carbon-silicon composite, comprising:
the porous carbon support according to any one of claims 10 to 12; and
silicon formed on at least a portion of a surface and inside at least a portion of pores of the porous carbon support.

14. A battery anode material, comprising the porous carbon support according to any one of claims 10 to 12.

15. A battery anode material, comprising the carbon-silicon composite according to claim 13.
